# EUROPÄISCHE PATENTANMELDUNG

(11) **EP 2 692 425 A1**
(43) Veröffentlichungstag der Anmeldung: **05.02.2014**
(21) Anmeldenummer: 12005521.5
(22) Anmeldetag: 30.07.2012
(51) Int. Cl.: B01J 3/00, C07C 1/00, C10J 3/32, C10J 3/66

(54) **Verfahren und Anlage zur Erzeugung von Treibstoffen aus organischen Stoffen mittels gestufter Mikrowellenbehandlung**

(71) Anmelder: Wieser-linhart, Emil A. J., 5020 Salzburg (AT)
(72) Erfinder: Wieser-linhart, Emil A. J., 5020 Salzburg (AT)
(74) Vertreter: Grimm, Siegfried

(57) **Zusammenfassung**

Die vorliegende Erfindung betrifft Verfahren zur Erzeugung von Treibstoffen (14) aus organischen Stoffen (1) in Gegenwart von Katalysatoren (2) in einem mehrstufigen Prozess unter Verwendung von Mikrowellen (15), ferner Anlagen geeignet zur Durchführung des Verfahrens sowie die Verwendung von Mikrowellen (15) bei solchen Verfahren und die Verwendung spezieller Reaktoren (5, 6, 7) bei solchen Verfahren.

## Beschreibung

Die vorliegende Erfindung betrifft Verfahren zur Erzeugung von Treibstoffen aus organischen Stoffen in einem mehrstufigen Prozess unter Verwendung von Mikrowellen, ferner Anlagen geeignet zur Durchführung des Verfahrens sowie die Verwendung von Mikrowellen bei solchen Verfahren und die Verwendung spezieller Reaktoren bei solchen Verfahren.

Zur Erzeugung von Treibstoffen aus organischen Ausgangsmaterialien sind gemäss dem Stand der Technik verschiedene Verfahren vorgeschlagen worden; diese zeigen jedoch verschiedene Nachteile.

Die Eigenschaften von Mikrowellen, und deren Interaktion mit Materie, sind gut untersucht. Mikrowellen können interferieren, gebeugt, gebrochen und reflektiert werden. Treffen Mikrowellen auf Materie, so ist die Wirkung von deren dielektrischen Eigenschaften abhängig. Unpolare Feststoffe, wie Glas, Keramik oder Teflon, lassen Mikrowellen fast ohne Verlust passieren. Solche Materialien werden als mikrowellentransparent bezeichnet. An Metalloberflächen hingegen werden Mikrowellen reflektiert. Feststoffe mit einem delokalisierten Elektronensystem und ausgeprägter Kristall- oder Porenstruktur, wie z.B. Aktivkohle oder auch Zeolithe, sind polar. Bei solchen Materialien bildet sich durch die Wechselwirkung mit Mikrowellen ein Hotspot mit starker Wärmewirkung. Flüssigkeiten verhalten sich je nach Polarität verschieden, Wasser und Säuren sind sehr polar und werden daher stark erwärmt, Öle dagegen sind unpolar und können nicht mit Mikrowellen erwärmt werden. Gase, soweit polar, können mit Mikrowellen erwärmt werden. Wegen deren geringen Dichte, im Vergleich zu Feststoffen und Flüssigkeiten, ist dieser Effekt für die vorliegende Erfindung von untergeordneter Bedeutung.

Brümmer (DE 102009033216A1) beschreibt ein Verfahren zur Herstellung von Leichtölen, bei dem Biomasse und Kunststoffe unter Beimischung eines zeolithischen Katalysators zuerst zu Pellets verpresst und dann in einem runden Flachbettreaktor eingebracht werden. Danach werden die Pellets mittels eines sternförmigen 8-armigen Schiebers im ringförmigen Förderkanal, unter Mikrowellenbestrahlung, von einer Eintrittsöffnung über den Umfang zu einer Austrittsöffnung gefördert und dabei verölt, als Reaktionsbedingungen werden Temperaturen von 200 - 300°C und Reaktionsdrücke von 250-500 mbar (=Unterdruck) angegeben. Dieses Verfahren wird als nachteilig angesehen, da die zusätzliche Herstellung von Pellets aufwendig und kostenintensiv ist. Ferner wird die Anordnung der Mikrowellensender und die Geometrie der Reaktionskammer als ungünstig betrachtet.

Wieser (WO2006/131293) beschreibt ein katalytisches Verfahren um Treibstoff aus biogenem Rohstoff unter Verwendung von Trägeröl herzustellen. Dieses Verfahren wird als nachteilig angesehen, da Trägeröl als zusätzliche Komponente in das Verfahren eingeführt und anschliessend recykliert wird.

Eine Aufgabe der vorliegenden Erfindung ist daher die Bereitstellung eines verbesserten Verfahrens zur Erzeugung von Treibstoffen unter Einsatz von Mikrowellenstrahlung und die Bereitstellung einer entsprechenden Anlage. Von besonderer Bedeutung ist, eine wirtschaftlich operierende Anlage zur Verfügung zu stellen, die qualitativ hochwertige Produkte erzeugt, mit guter Ausbeute arbeitet und geltende EmissionsGrenzwerte erfüllt.

Die vorstehend umrissenen Aufgaben werden gemäss den unabhängigen Ansprüchen gelöst. Die abhängigen Ansprüche stellen vorteilhafte Ausführungsformen dar. Die Erfindung betrifft somit ein Verfahren zur Erzeugung von Treibstoffen aus organischen Rohstoffen unter Verwendung von Mikrowellenstrahlung. Die Erfindung betrifft weiter eine Anlage geeignet für dieses Verfahren sowie die Verwendung von Mikrowellenstrahlung und die Verwendung spezifischer Reaktoren in solchen Verfahren und solchen Anlagen.

Sofern sich aus dem direkten Zusammenhang keine andere Bedeutung ergibt, haben die folgenden Begriffe die hier angegebene Bedeutung

**"organische Substanzen**" sind dem Fachmann bekannt; der Begriff bezeichnet allgemein synthetisch hergestellte organische Verbindungen ("Kunststoffe") und natürliche organische Verbindungen ("Biomasse"). Der Reinheitsgrad der organischen Substanzen kann variieren, der Anteil der organischen Substanzen ist bevorzugt > 66 Massen-%, besonders bevorzugt > 90 Massen-%. Organische Substanzen können chemisch einheitlich sein ("Reinsubstanzen") oder als Gemisch vorliegen.

**"Kunststoffe"** sind dem Fachmann bekannt; der Begriff bezeichnet allgemein makromolekulare halbsynthetisch und insbesondere synthetisch hergestellte Feststoffe. Der Begriff umfasst Thermoplaste, Duroplaste und Elastomere. Kunststoffe können als reine Stoffe, als Stoffgemische / Blends vorliegen. Ferner können Kunststoffe in verschiedenen Reinheitsgraden vorliegen; somit umfasst der Begriff auch kunststoffhaltige Mischungen.

**"Biogene Rohstoffe**" bzw. **"Biomasse"** bezeichnet die durch Lebewesen laufend biochemisch synthetisierten organischen Substanzen und daraus hergestellte oder extrahierte Folgeprodukte. Die biogenen Rohstoffe können, je nach produzierendem Organismus, in die Bereiche pflanzliche, mikrobielle und tierische Biomasse gegliedert werden. **Pflanzliche Biomasse** umfasst beispielsweise Holz, Laub, Stroh, Kleie, Heu, Getreide, Pressrückstände aus dem Obst und Weinbau, Rübenschnitzel, Grünschnitt, Garten- und landwirtschaftliche Abfälle, aber auch Folgeprodukte wie Restholzprodukte, Stärke, Zucker, Zellulose, Altpapier. **Mikrobielle Biomasse** umfasst beispielsweise getrockneten Klärschlamm, sowie Fermenter- und Gärrückstände. **Tierische Biomasse** umfasst beispielsweise Reste aus der Tierhaltung, der Fischindustrie und Fleischindustrie, Restprodukte aus der Milch- und Käseindustrie aber auch Tiermehl. Im Rahmen der vorliegenden Erfindung ist pflanzliche Biomasse bevorzugt. Besonders bevorzugt wird Biomasse verwendet, welche Lignocellulose enthält ("lignocellulosic biomass"), typischerweise mit einem Gehalt von mehr als 30 Gew.% an Cellulosen, insbesondere von mehr als 60 Gew.% an Cellulosen oder im Wesentlichen aus Lignocellulose besteht. Solch bevorzugte Biomasse kann aus Holzpflanzen oder einjährigen Pflanzen bestehen bzw. gewonnen werden, als Beispiele seien angeführt Holz verschiedener Quellen, (wie z.B. Baumstämme, insbesondere nicht industriell verwertbare Baumstämme, Äste, Bruchholz, Abfallholz von Holzverarbeitungsanlagen); Gartenabfälle und landwirtschaftliche Reststoffe (wie z.B. Stroh, Kleie und getrocknete Rübenschnitzel). Besonders bevorzugt wird weiterhin Biomasse, die Kohlehydrate enthält oder daraus besteht.

Biogene Rohstoffe können flüssig oder fest vorliegen. Im Rahmen der vorliegenden Erfindung ist weiterhin feste Biomasse bevorzugt.

Besonders bevorzugt wird Biomasse verwendet, welche getrocknet ist, typischerweise mit einem Gehalt von weniger als 33 Gew.% Wasser, insbesondere von weniger als 20 Gew.% Wasser.

**"Treibstoffe"** sind dem Fachmann bekannt; der Begriff bezeichnet allgemein Kohlenwasserstoff-haltige Verbindungen und Gemische wie sie in Verbrennungskraftmaschinen eingesetzt werden können. Insbesondere bezeichnet der Begriff Stoffgemische enthaltend C6-C25 Alkane, C6-C25 Alkene, C6-C25 Alkine, C3-C25 Cycloalkane, C3-C25 Cyloalkene und/oder C6-C25 Aromaten; diese Definitionen schliesst auch alkylsubstituierte Verbindungen wie z.B. Toluol oder Methylcyclohexan sowie verzweigte Verbindungen wie z.B. 2-Ethylhexan ein. Solche Stoffe und Stoffgemische, die bestimmte Normen für Treibstoffe nicht erfüllen aber als Vorprodukt geeignet sind, werden - je nach Kontext - als Produktöl oder Treibstoff bezeichnet.

**"Katalysatoren"** sind dem Fachmann bekannt; der Begriff bezeichnet insbesondere solche Materialien die Mikrowellen absorbieren, d.h. entsprechende dielektrische Eigenschaften aufweisen. Vorteilhafte Katalysatoren sind hydrophil.

**"Mikrowellen"** sind dem Fachmann bekannt; der Begriff bezeichnet elektromagnetische Wellen im Frequenzband zwischen Radiowellen und Infrarot; typischerweise 300 MHz -300 GHz, bevorzugt 1 GHz - 300 GHz. Bevorzugt sind Mikrowellen im S-Band, z.B. mit 2450MHz und im xx Band, bevorzugt 915MHz.

Die im Zusammenhang mit der vorliegenden Erfindung gegebenen allgemeinen, bevorzugten und besonders bevorzugten Ausführungsformen, Bereiche usw. können beliebig miteinander kombiniert werden. Ebenso können einzelne Definitionen, Ausführungsformen usw. entfallen bzw. nicht relevant sein.

Nachfolgend wird die Erfindung, insbesondere Verfahren und die Anlage(n), unter Bezugnahme auf die Figuren näher erläutert. Zunächst wird dabei das erfindungsgemässe Verfahren in seiner Ausgestaltung als selbständiger Prozess erläutert, anschliessend verschiedene Verfahrensvarianten. Schliesslich werden dafür geeignete Anlagen beschrieben sowie Ausführungsbeispiele dargelegt.

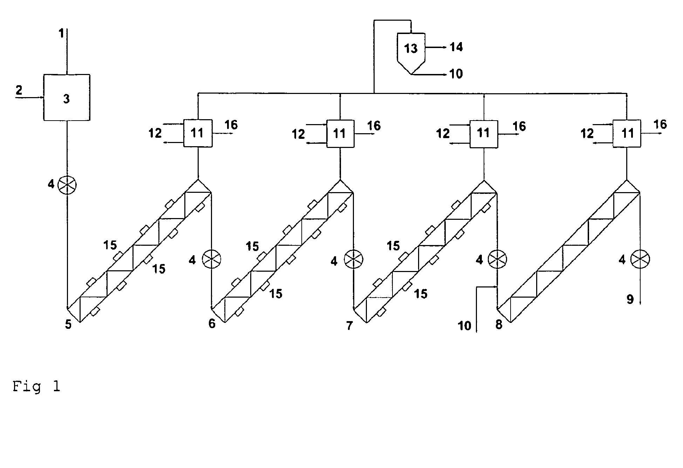

Fig. 1 zeigt schematisch ein Beispiel für eine erfindungsgemässe Anlage. Gezeigt werden in diesem Schema die Haupteinheit für Stoffumwandlung, nicht jedoch Nebeneinheiten wie die ggf. nötige Vorbereitung von Rohstoff (1) und Katalysator (2) und die Nebenanlagen für die Verwertung der Produkte Kohle (9), Produktöl (14), nicht kondensierbare Gase (16), Wasser (10). Es bedeuten: Mischer (3), Schleusen (4), Schneckenreaktoren (5), (6), (7), (8) mit Mikrowellensendern (15), Kondensatoren / Kühler (11) mit Kühlwasserkreislauf (12), Phasentrenner (13).

Ein **erster Aspekt** der Erfindung, ein Verfahren zur Erzeugung von Treibstoffen aus organischen Substanzen, wird nachstehend näher erläutert.

Die Erfindung betrifft demgemäss ein Verfahren zur Erzeugung von Treibstoffen (14) aus organischen Substanzen (1), welches die nachfolgend genannten Schritte (i) bis (vi) umfasst: (i) Bereitstellung einer Mischung aus organischen Substanzen (1) und Katalysator (2); (ii) Erwärmen der besagten Mischung auf 120 - 180°C und Abführen ggf. entstehender gasförmiger Produkte (1. Schritt); (iii) Erhitzen der so erhaltenen Mischung auf 300 - 350°C und Abführen der dabei entstehenden gasförmigen Produkte (2. Schritt); (iv) Erhitzen der verbleibenden Mischung auf 400 - 500°C und Abführen der dabei entstehenden gasförmigen Produkte (3. Schritt); (v) Kühlung der so erhaltenen Mischung auf unter 100°C und Abführung der dabei entstehenden festen Produkte (9) und der ggf. entstehenden gasförmigen Produkte (4. Schritt); (vi) Aufarbeitung der erhaltenen gasförmigen Produkte; wobei die Schritte 1, 2, 3 und 4 in separaten Reaktoren durchgeführt werden und wobei die Erwärmung der Reaktionsmischung in den Schritten 1, 2 und 3 durch Bestrahlung mit Mikrowellen erfolgt.

Dieses Herstellungsverfahren hat sich als besonders günstig herausgestellt. Ein wichtiger Vorteil des erfindungsgemässen Verfahrens ist die günstige Energie- und Massenbilanz. Ein weiterer Vorteil des erfindungsgemässen Verfahrens ist die Robustheit des Prozesses sowohl in Bezug auf Qualitätsschwankungen beim Ausgangsmaterial als auch in Bezug auf die notwendigen Anlagenteile. Ein weiterer Vorteil der erfindungsgemässen Verfahrensführung ist, dass im Ausgangsmaterial ggf. enthaltenes körniges inertes Material (z.B.Sand) ohne Probleme durch die Anlage gefördert wird.

Nachfolgend werden die einzelnen Teilschritte des erfindungsgemässen Verfahrens näher erläutert.

**Mikrowellenbestrahlung**: Die Verwendung von Mikrowellenstrahlung in chemischen Reaktionen ist an sich bekannt. Mikrowellenstrahlung kann dabei als einzige oder als ergänzende Energiequelle fungieren.

Mikrowellengeneratoren sind kommerziell erhältlich; geeignete Mikrowellengeneratoren haben bspw. eine Ausgangsleistung von 5 - 40 kW. Eine Anpassung bzw. Regelung der Mikrowellen auf das Verfahren / die verwendeten Ausgangsmaterialien und Katalysatoren kann durch Abstimmung mittels HF Tuner erfolgen. Eine gleichmässige Bestrahlung kann durch die Anordnung der Mikrowellengeneratoren und deren Abstrahlungsleistung erfolgen. Durch die Regelung der Mikrowellenleistung kann die Temperatur des Materials im Reaktor bei gegebenen Durchsatz eingestellt werden kann.

In einer vorteilhaften Ausführungsform des erfindungsgemässen Verfahrens erfolgt die Erwärmung der Reaktionsmischung in den Schritten 1, 2 und 3 durch Bestrahlung mit Mikrowellen so, dass kein Mikroplasma entsteht. Dies kann durch Justierung der Strahlungsleistung und / oder Anordnung der Mikrowellen-Sender sichergestellt werden.

In einer weiteren vorteilhaften Ausführungsform des erfindungsgemässen Verfahrens erfolgt die Energiezufuhr (Erwärmung) der Reaktionsmischung in den Schritten 1, 2 und 3 ausschliesslich durch Bestrahlung mit Mikrowellen.

In einer weiteren vorteilhaften Ausführungsform des erfindungsgemässen Verfahrens erfolgt die Energiezufuhr (Erwärmung) der Reaktionsmischung in den Schritten 1, 2 und 3 durch Bestrahlung mit Mikrowellen und zusätzlich durch indirekte Erwärmung mittels Trägeröl. In dieser Variante erfolgt jedoch zumindest 50% des Energieeintrages über Mikrowellen.

Somit betrifft die vorliegende Erfindung auch die Verwendung von Mikrowellensendern in einem mehrstufigen Verfahren zur Herstellung von Treibstoffen aus organischem Material. **Separate Reaktoren**: Wie bereits ausgeführt, erfolgen zumindest die Schritte 1 - 4 in separaten Reaktoren. Dies führt zu einer verbesserten Prozesskontrolle, vor allem bei variierenden Ausgangsmaterialien (Gesamtmenge an organischen Substanzen und deren Zusammensetzung), sowie zu einer verbesserten Aufarbeitung der entstehenden Produkte.

In einer weiteren vorteilhaften Ausführungsform des erfindungsgemässen Verfahrens werden zumindest die Schritte 1, 2, 3 und 4 kontinuierlich geführt. Zusätzlich können einzelne oder alle der Aufarbeitungsschritte kontinuierlich geführt werden. Zusätzlich kann die Bereitstellung des Ausgangsmaterials kontinuierlich erfolgen.

In einer weiteren vorteilhaften Ausführungsform des erfindungsgemässen Verfahrens werden die Schritte 1, 2, 3 und 4 mit einem Überdruck von 10 - 50 mbar ("drucklos") geführt. Prozesstechnisch gesehen ist dieser Druckbereicht vorteilhaft gegenüber Verfahren die bei Unterdruck oder bei Überdruck arbeiten.

Die Reaktoren (5, 6, 7, 8) gemäss dem erfinderischen Verfahren sind in Reihe geschaltet. Es ist offensichtlich, dass für jeden Schritt unabhängig voneinander auch zwei oder mehr Reaktoren parallel vorgesehen werden können. Vorteilhaft sind die Reaktoren (5, 6, 7, 8) für die Schritte 1, 2, 3 und 4 als Rohrreaktoren, insbesondere als Schneckenreaktoren ausgestaltet. Geeignete Reaktoren können mit einer einzelnen Schnecke oder einer Doppelschnecke ausgestattet sein. Vorteilhaft werden die Reaktoren (5, 6, 7, 8) am Eingang mit einer Zellenrad-schleuse (4) versehen. Vorteilhaft werden die Reaktoren (5, 6, 7, 8) am Ausgang mit einer Zellenradschleuse (4) versehen (wobei Ausgang Reaktor (5) = Eingang Reaktor (6) usw.).

**Bereitstellung einer Reaktionsmischung:** Die Bereitstellung der Ausgangsmaterialien kann nach an sich bekannten Methoden erfolgen.

In einer vorteilhaften Ausführungsform des erfindungsgemässen Verfahrens umfasst die Bereitstellung der Mischung aus organischen Substanzen (1) und Katalysator (2) die folgenden Schritte: (i) Zerkleinern von festen organischen Substanzen auf Partikelgrösse von 0.5 - 50 mm, z.B. 5 mm und / oder Mischen von festen und flüssigen organischen Substanzen, (ii) Bereitstellen von Katalysator ; (iii) Mischen von besagten organischen Substanzen und besagtem Katalysator. Nach erfolgter Durchmischung wird das katalysatorhaltige Ausgangsmaterial in den Reaktor eingetragen, bspw. über eine Zellenradschleuse (4) in einen Schneckenreaktor (5).

Die eingesetzten organischen Substanzen können aus einer Vielzahl von kohlenstoffhaltigen Substanzen ausgewählt werden, diese können aus natürlichen Ressourcen stammen ("Biomasse") oder aus synthetischen / petrochemischen Prozessen ("Kunststoffe"). Die organischen Substanzen können sortenreine Materialien sein oder Gemische. In einer Ausführungsform werden Kunststoffe eingesetzt, bevorzugt ein Gemisch welches PE, PP, PS und/oder Kautschuk enthält oder daraus besteht. In einer weiteren Ausführungsform wird Biomasse eingesetzt, bevorzugt ein Gemisch welches Lignocellulose, Kohlehydrate und / oder deren Derivaten enthält oder daraus besteht.

Die eingesetzten organischen Substanzen können sowohl fest als auch flüssig sein, bevorzugt sind jedoch feste Ausgangsmaterialien. Die geeignete Konsistenz des Ausgangsmaterials hängt vom Reaktor (5, 6, 7, 8) ab; bei Verwendung eines Schneckenreaktors muss die Förderbarkeit gegeben sein. Bevorzugt werden flüssige Ausgangsmaterialien daher nur in dem Umfang zugesetzt, als sie vom festen Ausgangsmaterial gebunden / aufgesaugt werden können, ohne dass das feste Ausgangsmaterial seine Förderbarkeit verliert.

Der eingesetzte Katalysator kann aus einer Vielzahl von Verbindungen ausgewählt werden, welche Mikrowellen absorbieren. In einer Ausführungsform werden Katalysatoren eingesetzt, welche ausgewählt sind aus der Klasse der Zeolithe, der Silikate (natürliche oder synthetische) und der Aktivkohlen. Der Katalysator kann als Feststoff oder als Gemisch mit einem Verdünnungsmittel (z.B. in der Form einer Paste oder einer Suspension) eingesetzt werden.

Der Wassergehalt des Ausgangsmaterials kann in einem breiten Bereich variieren.

Vorteilhaft weist die Mischung aus organischen Substanzen und Katalysator eine Restfeuchte von < 35% auf. Höhere Werte für den Wassergehalt sind zwar möglich, erfordern jedoch die aufwändige Abtrennung des Wassers aus den Schritten 1-3. Vorteilhaft weist die Mischung aus organischen Substanzen und Katalysator eine Restfeuchte von > 10% auf. Geringere Werte für den Wassergehalt sind zwar möglich, doch ist ein gewisser Wassergehalt vorteilhaft für die Erwärmung mittels Mikrowellen und / oder vorteilhaft für die Funktion des Wassers als Donator für Wasserstoff.

Die Korngrösse des Ausgangsmaterials kann in einem breiten Bereich variieren. Vorteilhaft weist die Mischung aus organischen Substanzen und Katalysator eine Korngrösse von 0.5-5 mm auf (im Fall von unverpresstem Material) oder eine Korngrösse von 5-50 mm auf (im Fall von verpresstem Material). Diese Korngrössen haben sich in Versuchen als günstig erwiesen um einen stabilen Prozess mit guten Ausbeuten zu gewährleisten.

Der Katalysatorgehalt des Ausgangsmaterials kann in einem breiten Bereich variieren. Vorteilhaft weist die Mischung aus organischen Substanzen und Katalysator einen Anteil an Katalysator im Bereich von 0.5 - 5 Masse-% auf. Dieser Gehalt hat sich in Versuchen als günstig erwiesen, um einen stabilen Prozess mit guten Ausbeuten zu gewährleisten.
**1. Schritt**, Behandlung Reaktionsmischung (Erwärmung): Das vorstehend beschriebene Ausgangsgemisch wird einem ersten Reaktor zugeführt, vorteilhaft einem Schneckenreaktor (5) via Zellenradschleuse (4), und dabei auf 120 - 180 °C (bspw. 150 °C) erwärmt. Die Erwärmung erfolgt teilweise oder vollständig, bevorzugt ausschliesslich, mittels Mikrowellen. Dafür ist der Reaktor (5) mit Mikrowellensendern (15) versehen, wobei über Hohleiter die Mikrowelle in den Reaktor (5) eingebracht wird. Die bei diesem Schritt entstehenden Dämpfe werden abgeleitet, bevorzugt in einen Kondensator (11). Die hier abgeleiteten Dämpfe sind reich an H2O; dieser Schritt ist daher dazu geeignet, sowohl die Ausgansmaterial vorzuwärmen als auch den Wassergehalt einzustellen.
**2. Schritt**, Behandlung Reaktionsmischung (Reaktion): Das so entstandene Reaktionsgemisch wird einem weiteren Reaktor zugeführt, vorteilhaft einem Schneckenreaktor (6) via weitere Zellenradschleuse (4). Der Transport in diesen Reaktor kann durch Schwerkraft erfolgen. Die Erwärmung erfolgt teilweise oder vollständig, bevorzugt ausschliesslich, mittels Mikrowellen. Auch dieser Reaktor (6) ist daher mit Mikrowellensendern (15) versehen. Die Strahlung wird vorteilhaft über mikrowellentransparente Fenster in den Reaktor (6) eingekoppelt; die Raktionsmischung wird dabei auf 300 - 350 °C (bspw. 350 °C) erwärmt. Als Wärmeerzeuger und Überträger fungiert dabei sowohl der durch die Mikrowellen angeregte Katalysator, als auch die sich bildende Kohle. Es wird davon ausgegangen, dass sich kein Mikroplasma bildet. Es entsteht ein Mischdampf, bestehend aus Wasserdampf, nicht kondensierenden Gasen und Öldämpfen. Diese Dämpfe werden abgeleitet, bevorzugt in einen weiteren Kondensator (11). Die hier abgeleiteten Dämpfe sind vergleichsweise ärmer an H2O und reich an kurzkettigen Kohlenwasserstoffen. Dieser Schritt ist daher dazu geeignet, das Ausgangsmaterial in die gewünschten Produkte umzusetzen.
**3. Schritt**, Behandlung Reaktionsmischung (Reaktion): Das so entstandene Reaktionsgemisch wird einem weiteren Reaktor zugeführt, vorteilhaft einem Schneckenreaktor (7) via weitere Zellenradschleuse (4). Der Transport in diesen Reaktor kann durch Schwerkraft erfolgen.

In diesem Reaktor wird die Reaktionsmischung auf 400 - 550 °C (bspw. 450 °C) erwärmt. Dabei wird das in der Reaktionsmischung vorliegende Schweröl verdampft. Die Dämpfe verlassen die Entölungsschnecke nach oben in die folgende Kondensation. Die Erwärmung erfolgt teilweise oder vollständig mittels Mikrowellen. Eine zusätzliche Indirekte Beheizung ist insbesondere für diesen Schritt möglich. Die dabei entstehenden Dämpfe werden abgeleitet, bevorzugt in einen weiteren Kondensator (11). Die hier abgeleiteten Dämpfe sind arm an H2O und an Kohlenwasserstoffen mit kurzer C-Zahl(C₁-C₂₀); jedoch reich an Kohlenwasserstoffen hoher C-Zahl (C₂₀₊). Dieser Schritt ist daher dazu geeignet, das Ausgangsmaterial in die gewünschten Produkte umzusetzen und eine weitgehend vollständige Umsetzung zu gewährleisten.
**4. Schritt**, Behandlung Reaktionsmischung (Kühlung): Das so entstandene feste Restprodukt wird einem weiteren Reaktor zugeführt, vorteilhaft einem Schneckenreaktor (8) via weitere Zellenradschleuse (4), und dabei auf < 100 °C (bspw. 50 °C) gekühlt. Dieser Schritt ist dazu geeignet, das verbleibende Restprodukt in ein gut handhabbares und handelbares Produkt (Kohle (9)) umzusetzen.

Die erforderliche Kühlung kann direkt erfolgen. In dieser Ausführungsform wird am Eingang des Reaktors (8) Wasser (bspw. im Prozess gebildetes Wasser (10)) eingedüst, sodass durch Verdampfungskühlung die Temperatur unter 100°C gesenkt wird und beim folgenden Kontakt mit Luft keine Selbstzündung erfolgen kann. Die dabei entstehenden Dämpfe werden abgeleitet, bevorzugt in einen weiteren Kondensator (11). Die hier abgeleiteten Dämpfe enthalten überwiegend H2O und geringe Mengen organischer Stoffe. Ferner entsteht ein kohlehaltiges Restprodukt; dieses hat in Abhängigkeit von der zugeführten Wassermenge unterschiedlichen Wassergehalt.

Alternativ kann die erforderliche Kühlung auch indirekt erfolgen, in diesem Fall ist die gebildete Kohle (9) praktisch wasserfrei.

**Aufarbeitung**: Die Aufarbeitung der Reaktionsprodukte kann nach an sich bekannten Methoden erfolgen. Die Reaktionsprodukte des erfindungsgemässen Verfahrens lassen sich in 4 Gruppen aufteilen, (i) nicht kondensierbare Gase; (ii) Produktöl; (iii) Prozesswasser und (iv) Kohle. Die Auftrennung dieser einzelnen Gruppen ist an sich bekannt. In einer beispielhaften Variante werden zunächst die bei Reaktionsbedingungen gasförmigen Produkte (Gase, Produktöl, Prozesswasser) in die Kondensatoren (11) abgeführt und dort mittels Kühlwasser (12) gekühlt. Dabei werden die nicht kondensierbaren Gase (16) abgetrennt und ggf. einer thermischen Verwertung (bspw. einem Gasmotor) zugeführt. Schliesslich wird die wässrige Phase (Prozesswasser (10)) von der nicht-wässrigen Phase (Produktöl (14)) im Phasentrenner / Settler (13) getrennt. Sowohl die wässrige Phase (10) als auch das Produktöl (14) werden nachbehandelt um einerseits gereinigtes Wasser, andererseits Normtreibstoffe zu erhalten. Geeignete Vorrichtungen für die einzelnen Operationen sind dem Fachmann bekannt und können anhand der Produktströme ausgelegt werden. Das anfallende Produktöl erfüllt entweder sofort die vorstehend genannten Kriterien eines "Treibstoffes" oder muss noch nachbehandelt werden (z.B. Rektifikation, Phasentrennung, Entgasen, Hydrieren), um diese Kriterien zu erfüllen. Aufgrund der vorliegenden Produktzusammensetzung und der möglichen Einbindung des Verfahrnes in grössere Prozesse sind jedoch die nachfolgend genannten Ausführungsformen besonders vorteilhaft.

In einer vorteilhaften Ausführungsform des erfindungsgemässen Verfahrens umfasst die Aufarbeitung der gasförmigen Produkte (Schritte 1, 2, 3 und 4) die folgenden Schritte: (i) separate Kühlung zur Abtrennung nicht kondensierbarer Gase (16) von einer flüssigen Phase und (ii) gemeinsame Weiterverarbeitung der verbleibenden flüssigen Phase zur Abtrennung von Treibstoff/Produktöl (14) und wässriger Phase (10).

In einer weiteren vorteilhaften Ausführungsform des erfindungsgemässen Verfahrens werden die gasförmigen Produkte (16), ggf. nach Aufarbeitung, einem Gasmotor oder einer Gasturbine zugeführt.

In einer weiteren vorteilhaften Ausführungsform des erfindungsgemässen Verfahrens wird das Produktöl (14) einer Rektifikation unterworfen. Durch diese Massnahme kann sichergestellt werden, dass der erzeugte Produktöl / Treibstoff alle Handelsnormen erfüllt.

In einer weiteren vorteilhaften Ausführungsform des erfindungsgemässen Verfahrens werden die festen Produkte (9) ggf. nach Trocknung, einer Vergasung mit folgenden Steamreforming unterworfen.

In einer weiteren vorteilhaften Ausführungsform des erfindungsgemässen Verfahrens wird die wässrige Phase (10) unter Bildung von Gas (bzw. Biogas, je nach Ausgangsmaterial) aufgearbeitet.

Weitere vorteilhafte und/oder bevorzugte Ausführungsformen des erfindungsgemässen Verfahrens werden nachstehend beschrieben.

**Produktionsverbund:** So ist es bspw. möglich, das hier beschriebene Verfahren in einen grösseren Verbund einzubeziehen. In einer weiteren Ausführungsform betrifft die Erfindung daher ein Verfahren wie hier beschrieben, welches in einem Produktionsverbund integriert ist; insbesondere ein Verfahren welches mit einem Verfahren zur Rohöl-Verarbeitung oder mit einem Verfahren zur Biodiesel-Herstellung oder einem Verfahren zur Flüssigpyrolyse gekoppelt ist. Unter dem Begriff "Kopplung" wird hier der Produktionsverbund zwischen Anlagen verstanden, bei der Stoff- und/ oder Energieströme ausgetauscht werden.

**Power Plant**: In einer weiteren Ausführungsform betrifft die Erfindung ein Verfahren wie vorstehend beschrieben **dadurch gekennzeichnet, dass** die im Verfahren gebildeten Treibstoffe teilweise oder vollständig einem Dieselmotor zugeführt werden. Für die gebildeten Treibstoffe stehen verschiedene Verwendungen offen: Sie können entweder (ggf. nach weiterer Veredlung) kommerzialisiert werden, oder im Rahmen betriebsinternen Bedarfs weiter verwendet werden. Bei Zufuhr zu einem Dieselmotor kann so den Eigenenergiebedarf der Anlage teilweise oder vollständig gedeckt werden. Welche Verwendung getroffen wird, hängt u.a. von wirtschaftlichen Überlegungen und der Produktqualität ab.

In einer weiteren Ausführungsform betrifft die Erfindung ein Verfahren wie vorstehend beschrieben **dadurch gekennzeichnet, dass** die Abgase der Motoren einer Wärmerückgewinnung zugeführt werden. Diese Massnahme verbessert die Energiebilanz der Anlage.

In einer weiteren Ausführungsform betrifft die Erfindung ein Verfahren wie vorstehend beschrieben **dadurch gekennzeichnet, dass** die Motoren der Erzeugung elektrischer Energie dienen. In einer Ausführungsform werden alle entstehenden Gase zur Energieerzeugung verwendet. In einer weiteren Ausführungsform wird der Dieselmotor jedoch nur insoweit zur Energieerzeugung verwendet, wie es zum Eigenbedarf der erfindungsgemässen Anlage notwendig ist.

**Wasserstoffzufuhr:** Es zeigt sich, dass das erfindungsgemässe Verfahren ohne Zufuhr von Wasserstoff geführt werden kann. Entsprechend wird in einer Ausführungsform in den 1.-4. Schritt kein externer Wasserstoff zugeführt. Ohne sich an eine Theorie gebunden zu fühlen, wird davon ausgegangen, dass bei der Mikrowellenbehandlung der hydrophile Katalysator, z.B. ein Zeolith mit entsprechender Porenstruktur, als Wasserstoff-Donator fungiert. In diese Poren wird Wasser bevorzugt gebunden und wegen der hohen Polarität unter Mikrowelleneinfluss stark erhitzt( bis 3000°C) und dabei gespalten. Die Spaltprodukte sind H+, OH-, H2 und O. Insbesondere der naszierende Wasserstoff reagiert sofort mit dem Kohlenstoff zu Öl. Je nach Katalysatorgehalt kann damit die Wasserstoffsättigung eingestellt werden. Unabhängig davon kann das Produktöl (14) in einer weiteren Stufe hydriert werden.

**Hydrierung:** In einer weiteren vorteilhaften Ausführungsform des erfindungsgemässen Verfahrens wird das Produktöl (14) einer Hydrierung, und ggf. einer damit verbundenen Entschwefelung, unterworfen. In Abhängigkeit von den gewählten Verfahrensparametern, der Anlagenausgestaltung und dem Ausgangsmaterial können so bspw. die Qualitätskriterien eines Normdiesels nach gegenwärtig gültiger DIN EN 590 beim Phosphor-, Stickstoff-, Schwefel-, Chlor- und Wassergehalt, sowie der Oxydationsstabilität, erfüllt werden.

Prinzipiell können für die Hydrierung des Produktöls beliebige Wasserstoffquellen verwendet werden, einschließlich reinem H₂ und H₂-haltige Gasgemische. In einer Ausführungsvariante der Hydrierstufe wird daher kommerziell erhältlicher Wasserstoff verwendet. Dies führt zu geringen Investitionskosten. In einer weiteren Ausführungsvariante der Hydrierstufe wird Wasserstoff eingesetzt, welcher aus der Umsetzung des im Verfahren abgetrennten Feststoffes durch Steam-Reforming mit anschließendem Watergas-shift erzeugt wird; als Reaktoren dafür wären z.B. "Heatpipe-Reformer" geeignet. Durch diese Massnahme(n) kann sichergestellt werden bzw. wird sichergestellt, dass der erzeugte Treibstoff alle Handelsnormen erfüllt.

Sofern als Ausgangsmaterialien Biomasse eingesetzt wird und der Wasserstoff innerhalb der Anlage erzeugt wird (z.B. wie oben beschrieben), wäre der verwendete Wasserstoff als biogen einzustufen.

Geeignete Hydrieranlagen für die vorliegenden Stoffgemische sind an sich bekannt und Stand der Technik z.B. bei der Fetthärtung oder auch in Raffinerien der Erdölverarbeitung. Die folgenden Verfahrensparameter haben sich für die Hydrierung als vorteilhaft erwiesen: i) Temperatur: 100 - 350°C; ii) Druck: 3 - 50 bar; iii) Verweilzeit: 5 - 30 min. Geeignete Katalysatoren für die vorliegenden Stoffgemische sind an sich bekannt und kommerziell erhältlich; vorteilhaft sind heterogene Katalysatoren bei denen das katalytisch aktive Metall /aktive Metallverbindung auf einen inerten Träger aufgebracht ist.

**Kohleverwertung:** In einer weiteren Ausführungsform betrifft die Erfindung ein Verfahren wie vorstehend beschrieben **dadurch gekennzeichnet, dass** die als Reaktionsprodukt gebildete Kohle kontinuierlich abgetrennt wird und die abgetrennte Kohle mit entstehendem Produktwasser unter Luftabschluss gemischt wird. Die Mischung unter Luftabschluss ist vorteilhaft, da die abgetrennte Kohle zunächst sehr heiss ist und bei Luftzutritt sofort selbsttätig abbrennen würde. Der gebildete Kohleschlamm ist eine gängige Form für den Transport und die Verwendung von feinteiliger Kohle / Kohlestaub. Diese Verfahrensvariante erlaubt gleichzeitig die Entsorgung von ggf. verunreinigtem Produktwasser ohne weitere Aufreinigung desselben.

In einer weiteren Ausführungsform betrifft die Erfindung ein Verfahren wie vorstehend beschrieben **dadurch gekennzeichnet, dass** die als Reaktionsprodukt gebildete Kohle mit Wasser, bevorzugt mit dem entstandenen Produktwasser, einem Steam-Reforming mit anschliessender Watergasshift Reaktion unterworfen werden. Der Kohlevergasungs - Verfahrensschritt, als steamreforming - watergasshift- Prozess bekannt und auch in der Erdölindustrie verwendet, umfasst die Reaktionsschritte i) autothermes oder allothermes steamreforming und ii) watergasshift-Reaktion.

**Allgemeine Verfahrensmerkmale:** Eine grosse Bandbreite an Ausgangsmaterialien kann im vorliegenden mikrowellengestützten Verfahren verwendet werden, wie vorstehend beschrieben. Das Produktöl fällt zunächst gasförmig an, so dass eine leichte Abtrennung gegeben ist. Variationen des hier beschriebenen Verfahrens sind dem Fachmann aufgrund der allgemeinen Kenntnisse auf dem Gebiet der Petrochemie und des Wertstoffrecyclings geläufig. Auf folgende Merkmale sei spezifisch Verwiesen.

Typischerweise wird das Ausgangsmaterial "zerkleinert" dem Reaktor (5) zugeführt, d.h. in Form von Spänen, Schnipseln, Häcksel, Formstücken oder dergleichen so dass eine schnelle und vollständige Reaktion möglich ist. Welche Grösse geeignet ist, hängt kann in einfachen Versuchen bestimmt werden.

Die Reaktionsschritte 1-4 erfolgen "drucklos", d.h. in Reaktoren bei Normaldruck. Insbesondere aus sicherheitstechnischen Überlegungen wird auch bei drucklosen Reaktoren /Behältern typischerweise ein leichter Überdruck, von z.B. 20 - 40 mbar, eingestellt. Somit ist der Begriff "drucklos" im Rahmen der vorliegenden Erfindung als max. 100mbar über Normaldruck zu verstehen. Solche Drücke können gemäss Stand der Technik mittels handelsüblicher Überdruckventile eingestellt werden. Zweck des leichten Überdrucks ist es, das Eindringen von Umgebungsluft, und somit das Risiko der Bildung explosiver Gasgemische, zu minimieren. Dies kann bspw. mit im Verfahren gewonnenen / abgeschiedenen CO₂ erfolgen. Die Erfindung betrifft somit auch ein Verfahren bei dem zumindest Schritt a) mittels CO₂ inertisiert wird, und wobei die Regelung der Inertisierung bevorzugt automatisiert erfolgt.

Die im Einzelfall optimale Temperatur kann anhand von Routineversuchen bestimmt werden.

Ein **zweiter Aspekt** der Erfindung, eine Anlage geeignet zur Durchführung der vorstehenden Verfahren, wird nachstehend näher erläutert(vgl. Fig.1).

In einer Ausführungsform umfasst die erfindungsgemässe Anlage die nachstehend genannten, aufeinander folgenden und miteinander verbundenen Apparate:
■ ggf. Mischer (3) (zum Mischen von organischen Substanzen und Katalysator);
■ beheizbarer 1. Schneckenreaktor (5) mit Kühler (11) zur Entnahme gasförmiger Produkte am Reaktorende;
■ beheizbarer 2. Schneckenreaktor (6) mit Kühler (11) zur Entnahme gasförmiger Produkte am Reaktorende;
■ beheizbarer 3. Schneckenreaktor (7) mit Kühler (11) zur Entnahme gasförmiger Produkte am Reaktorende;
■ beheizbarer 4. Schneckenreaktor (8) mit Kühler (11) zur Entnahme gasförmiger Produkte am Reaktorende und zur Entnahme von festen Reaktionsprodukten (9);
■ ggf. Phasentrenner (13) welcher mit den Kühlern (11) verbunden ist (zum Trennen von Wasser/Öl Gemischen)
wobei zumindest der Reaktor (6), bevorzugt Reaktor (6) und (7), besonders bevorzugt Reaktoren (5), (6) und (7) mit Mikrowellensendern (15) als Heizquelle versehen sind.

In weiteren Ausführungsformen ist die erfindungsgemässe Anlage **dadurch gekennzeichnet, dass** die Reaktoren (5), (6) und (7) im Wesentlichen, bevorzugt ausschliesslich, durch Mikrowellensender beheizt werden.

In weiteren Ausführungsformen ist die erfindungsgemässe Anlage **dadurch gekennzeichnet, dass** die Reaktoren (5), (6) und (7) unabhängig von einander als Einzelschnecke oder Doppelschnecke ausgeführt sind.

In weiteren Ausführungsformen ist die erfindungsgemässe Anlage **dadurch gekennzeichnet, dass** die Reaktoren (5), (6) und (7) unabhängig von einander in Ihrer Drehzahl regelbar sind. Durch diese Massnahme kann die Verweilzeit für jeden Reaktor separat eingestellt werden.

In weiteren Ausführungsformen ist die erfindungsgemässe Anlage **dadurch gekennzeichnet, dass** die Reaktoren (5), (6) und (7) am Ein- und Ausgang mittels Zellenradschleusen (4) versehen sind. Durch diese Massnahme ist es möglich, separate Mischdampfströme dem Verfahren zu entnehmen, welche separaten Kondensatoren / Kühlern (11) zugeführt werden können.

Ferner betrifft die vorliegende Erfindung auch die Verwendung von Schneckenreaktoren zur Herstellung von Treibstoffen. Vorteilhaft sind diese Schneckenreaktoren am Ein- und 7 oder Ausgang mit Zellenradschleusen versehen sind; besonders vorteilhaft sind die Zellenradschleusen am Ein- und Ausgang des Reaktors angeordnet. Vorteilhaft sind diese Schneckenreaktoren mit einem oder mehreren Mikrowellensendern als Heizquelle, bevorzugt als ausschliessliche Heizquelle, versehen.

In einer weiteren Ausführungsform umfasst die erfindungsgemässe Anlage zusätzlich einen Steamreformer und Watergasshift-Reaktor, (zur Umsetzung von Kohle und Prozesswasser zu Wasserstoff und CO₂) welcher dem Reaktor (8) nachgeschaltet ist. Dieses Anlagenteil kann Wasserstoff für die Weiterbehandlung des Produktöls zur Verfügung stellen.

In einer vorteilhaften Ausführungsform umfasst die erfindungsgemässe Anlage ferner eine Zerkleinerungsvorrichtung (zur Zerkleinerung des zugeführten Ausgangsmaterials (im Fall von Holz zu Spänen)), welche dem Mischer (3) vorgeschaltet ist.

In einer vorteilhaften Ausführungsform umfasst die erfindungsgemässe Anlage einen Gasmotor welcher einen Teil oder in der Anlage anfallenden nicht kondensierbaren Gase (16) verbrennt. Dieser Motor kann zur Strom- und/oder Wärmeerzeugung verwendet werden.

In einer vorteilhaften Ausführungsform umfasst die erfindungsgemässe Anlage eine Verbindung zwischen Phasentrenner (13) und Reaktor (8) ("Kühlschnecke"), derart, dass die wässrige Phase (10) in den Reaktor (8) eingeleitet wird und so eine direkte Kühlung des dort vorhandenen Materials auf < 100°C bewirkt. Durch diese Massnahme kann die entstandene Wässrige Phase zur Kühlung der gebildeten Kohle verwendet werden.

Die erfindungsgemässe Anlage kann stationär und modular aufgebaut sein. Je nach Anlagengrösse, kann der Durchsatz bei kleinen Anlagen (beispielsweise für die Landwirtschaft) 5 Tonnen Biomasse; bei Gross- Anlagen bis zu mehreren tausend Tonnen Kunststoffe pro Tag betragen, offensichtlich abhängig von der Dimensionierung der gesamten Anlage hinsichtlich deren Einsatz. Die Dimensionierung der Anlage kann über eine Vergrösserung/ Verkleinerung der einzelnen Anlagenteile erfolgen oder durch Parallelschaltung von Anlagenteilen.

Die einzelnen Anlagenteile der erfindungsgemässen Anlage wie hier beschrieben (Reaktoren, Zellenradschleusen usw.) sind an sich bekannt und ganz oder teilweise kommerziell erhältlich. Die Auswahl geeigneter Dimensionen, Materialien, Einbauten usw. liegt im Rahmen des technischen Fachwissens.

Wie aus den vorstehenden Ausführungen deutlich wird, sind die Anlagenteile (4) - (8) in Reihe hintereinander geschaltet. Aus verschiedenen Gründen (z.B. Betriebssicherheit, Flexibilität) kann es wünschenswert oder notwendig sein, einzelne Anlagenteile um parallel geschaltete weitere Anlagenteile zu ergänzen. So können z.B. zwei parallel betriebene Mischer (4) von einem Reaktor (5) gefolgt sein. Dies trifft auch auf die nebengeordneten Anlagenteile wie Kolonnen, Verbindungsleitungen, Pumpen usw. zu. Im Rahmen der vorliegenden Erfindung sind solche Alternativen mit umfasst und werden nicht jeweils separat benannt.

Die erfindungsgemässe Anlage kann mit einem einfachen Temperaturprofil gefahren werden. Jeder Reaktor (5) - (7) wird bei einer spezifischen Temperatur betrieben; eine gestufte Temperaturführung ist nicht notwendig. Dies erhöht die Anlagensicherheit und ist auch beim Scale-up von Vorteil.

Nachfolgend werden die einzelnen Anlagenteile im Detail beschrieben sowie vorteilhafte / bevorzugte Ausführungsformen dargelegt. Die Ausführung von Rohren, Ventilen, Stellgliedern, Messeinrichtungen wird nicht im Detail beschrieben, da dies im Bereich des allgemeinen Fachwissens liegt. Generell wird eine optimale Wäremausnutzung angestrebt, indem z.B. Abwärme über Wärmetauscher der Anlage zurückgeführt wird und thermische Isolierung an allen relevanten Stellen vorgesehen ist. **Zerkleinerer/ Vortrockner**: Dem Mischer kann ein Zerkleinerer vorgeschaltet sein. Sofern das verwendete Ausgangsmaterial nicht im ausreichenden Mass zerkleinert ist, wird dieser in eine erste Zerkleinerungsvorrichtung eingebracht. Diese kann beispielsweise eine Hacke, ein Schredder oder eine Mühle sein, in welcher eine Zerkleinerung des zugeführten Rohstoffes bis zur gewünschten Korngrösse stattfindet. Der zerkleinerte Rohstoff wird darauf ggf. einer Trockenanlage zugeführt. In dieser wird der Rohstoff mittels warmer Luft vorgetrocknet. Wie stark der Rohstoff vorgetrocknet wird ist wenig kritisch und hängt im Wesentlichen von der Auslegung der nachfolgenden Apparate ab. Das zerkleinerte und (vor-) getrocknete Ausgangsmaterial wird von der Trockenanlage über entsprechende Transporteinrichtungen mit beispielsweise Förderbändern oder Förderschnecken dem Mischer zugeführt.

**Mischer:** Im Mischer erfolgt werden die ggf. zerkleinerten und ggf. (vor-) getrockneten organische Substanzen und Katalysator miteinander vermischt. Das so erzeugte Ausgangsmaterial wird über entsprechende Transporteinrichtungen mit beispielsweise Förderbändern oder Förderschnecken dem Reaktor (5), vorteilhaft via Zellenrad-schleuse (4), zugeführt.

**Reaktorschnecke**: Im Reaktor erfolgt im Wesentlichen die Zerlegung der Polymerstruktur des biogenen Rohstoffes (insbesondere Zellulose) zu Monomeren. Gleichzeitig beginnen auch die Auftrennung der Ringstrukturen am Sauerstoffatom durch CO2 Bildung und damit die katalytische Abtrennung der Sauerstoffatome (Dehydratisierung und Decarboxylierung) im Wesentlichen zu H₂O, CO, CO₂ und Carbonsäuren die den Reaktor über die Gasphase verlassen. Des Weiteren findet die Umwandlung ("Polymerisation") der entstandenen Monomere zu C₆ bis C₂₀₊ Alkanen und C₆ bis C₂₀₊ Alkenen statt. Die Zugabe der Katalysatoraufschlämmung erfolgt bevorzugt am der Zuführschnecke zum Mischer. Die Temperatur im Reaktor wird durch mikrowellen Beheizung auf die vorstehend genannten Tempereaturen eingestellt. Vorteilhaft ist eine rasche Erhitzung Rohmaterials (200°C im Eintrag) auf über 300°C, bevorzugt auf 330-370°C, da dadurch die Produktausbeute positiv beeinflusst und die Kohleproduktion minimiert wird. Im Allgemeinen wird innerhalb von 2 min 90% des Reaktionsumsatzes (zu Produktöl, Wasser, Kohle und Gas) erzielt und innerhalb von 30 min 100% des Reaktionsumsatzes erzielt. In einer vorteilhaften Ausführungsform wird der Mischdampf der Reaktoren (welcher im wesentlichen Wasserdampf und Produktöldampf enthält) den zugeordneten separaten Kondensatoren zugeführt.

**Kondensator:** In einer bevorzugten Ausführungsform wird der entstandene Mischdampf aus den Reaktoren jeweils separaten Kondensationsanlagen (11) zugeleitet. Vorteilhaft umfasst die Kondensationsanlage einem kühlwassergekühlten Wärmetauscher in welchem auf ca. 35°C abgekühlt wird. Typischerweise fällt ein Mischkondensat aus drei Phasen an. Der nicht kondensierende Gasanteil kann am unteren Ende des Kondensators (z.B. über einen Tropfenabscheider und nachgeschaltetem Ventilator) abgeführt werden und dann bspw. einem Gasmotor zugeführt werden.

**Phasentrenner:** In einer bevorzugten Ausführungsform wird das in den Kondensatoren (11) erhaltene Mischkondensat einem Phasentrenner (13) zugeführt. Das Mischkondensat besteht typischerweise aus Produktöl (14) mit einer Dichte von ca. 0,835g/cm3, einer wässerigen Phase (10) mit einer Dichte von ca. 1,03g/cm3 und ggf einer teerigen schweren Phase mit einer Dichte von ca.1,3g/cm3 und kann statisch unter Einfluss der Gravitation in zwei (bzw. drei) nicht mischbare Flüssigphasen getrennt werden. Dies kann über Tauchwehre und entsprechend angeordneten Überläufen in einem kommunizierenden Abscheider aufgrund der Unmischbarkeit und des Dichteunterschiedes, erfolgen. Vorteilhaft werden die erhaltenen Flüssigkeiten drei Zwischenbehältern zugeführt.

**Zwischenbehälter:** Die drei Produkte, die Produktöl, die wässerige Phase und die teerige Schwerphase werden unterschiedlich weiterbehandelt oder entsorgt. Bevorzugt werden die drei Phasen weiterbehandelt. Dabei wird Produktöl vorteilhaft zuerst einem Zentrifugal - Separator zugeführt um Schwerölkomponenten und Trübstoffe abzutrennen, welche bspw. der teerigen Schwerphase zugeführt werden können. Das erhaltene Zentrat kann einem Vorerhitzer in Form des im Mischdampfstrom eingebauten Röhrenwärmetauschers zugeleitet und wiederum erwärmt und über einen trägerölerhitzten Nachwärmetauscher auf schlussendlich 250-350°C erhitzt werden. Damit ist bereits der Temperaturbereich für eine Produktölhydrierung erreicht, die hier folgen kann. Danach entspannt das erhitzte Öl in die Rektifikationskolonne wo die Treibstoffkomponente verdampft. **Hydrierreaktor für Produktöl**: Wie vorstehend beschrieben ist eine Hydrierung des Produktöls nicht zwingen nötig, kann aber vorteilhaft für das Produkt sein. Die Notwendigkeit einer Produktölhydrierung hängt u.a. ab vom eingesetzten biogenen Material, dem verwendeten Katalysator sowie den Verfahrensparametern. Zweck dieses Reaktionsschrittes ist es, den noch teilweise alkenischen Produktölstrom zu sättigen und von ggf. vorliegenden unerwünschten Begleitstoffen zu reinigen. Diese Hydrierung stellt eine Möglichkeit dar, die Erfüllung der aktuellen Handelsnormen für Treibstoffe (z.B. der Qualitätskriterien eines Normdiesels nach aktueller DIN EN 590 beim Stickstoff-, Schwefel-, Phosphor-, Chlor- und Wassergehaltgehalt, sowie der Oxydationsstabilität) sicher zu stellen. Der Hydrierreaktor für Produktöl kann prinzipiell ähnlich dem Hydrierreaktor für Trägeröl aufgebaut werden, weswegen auf dessen Beschreibung verwiesen wird. Bei der Auslegung ist zu beachten im Allgemeinen die Produktölhydrierung bei kleinerem Durchsatz und höherer Jodzahl erfolgt als die Trägerölhydrierung.

**Rektifikation:** Die Rektifikation hat die Aufgabe, die endgültige Trennung der Treibstoffkomponenten vom Trägeröl durchzuführen. Die Rektifikation solcher Produktgemische ist an sich bekannt, die Wahl der Apparate und Betriebspunkte wird im Wesentlichen durch die gewünschte Produktzusammensetzung bestimmt. So ist bspw. in einer Vakuumdestillationskolonne bei einem Druck von ca. 50 mbar Absolutdruck aufgrund der unterschiedlichen Siedebetreiche von Trägeröl und Produktöl eine Trennung durch einfache Destillation möglich. Bei einer geregelten Temperatur von ca. 250°C verdampft nur die Treibstoffkomponente, die Trägerölkomponente mit einem Siedebereich von 300 - 400°C verbleibt im Sumpfprodukt und wird teilweise oder vollständig (bevorzugt vollständig) in die Vorwärmschnecke rückgeführt. Danach kann die weitere fraktionierte Kondensation im Aufwärtsstrom mittels eines luftgekühlten, in die Kolonne eingebauten Röhrenwärmetauschers auf eine Trenntemperatur von 100-120°C erfolgen, wobei das anfallende Mitteldestillat (Diesel) bspw. über einen Glockenboden und Nachkühler in einen Tank abgeführt wird. Danach kann ein weiterer luftgekühlter Röhrenwärmetauscher angeordnet sein, wobei der den Produktöldampf auf z.B. 60 - 70°C kühlt und über einen weiteren Glockenboden das Leichtdestillat (Benzin) in einen Tank abgezogen wird. Danach kann ein mit Kühlwasser gekühlter Kopfkondensator angeordnet werden, wobei der Produktdampf auf ca. 35°C endgekühlt wird. Dieses flüssige Kopfprodukt in einen Mengenanteil von 2 - 3%, ist häufig geruchsbelastet, da es viele Aromaten und Aldehyde enthält, und kann ebenfalls über einen Tank schlussendlich entweder in den Gasmotor, oder in eine Fackel entsorgt werden.

**Steamreformer und Watergasshift-Reaktor**: In einem Steamreformer und WS-Reaktor kann die gebildete Kohle (9) mit dem gebildeten Prozesswasser (10) so umgesetzt werden, dass sich vorwiegend Wasserstoff und CO₂ bilden. Sowohl katalytische als auch thermische Verfahren können eingesetzt werden. Eine entsprechende Auslegung dieses Anlagenteils ist an sich bekannt und kann anhand bekannter Parameter vorgenommen werden. Mit der Integration dieses Anlagenteils in die Gesamtanlage können somit drei Vorteile in einem erreicht werden: i) Die anfallende Kohle (9) wird thermisch verwertet; ii) das ggf. belastete Prozesswasser (10) wird thermisch entsorgt; iii) eine hervorragende wirtschaftliche Wasserstoffversorgung wird ermöglicht. In einer alternativen Ausführungsform wird ein Steamreformer auf Basis Erdgas eingesetzt. Solche Steamreformer sind kommerziell erhältlich. Die gebildete Kohle (9) wird in diesem Fall nach bekannten Methoden weiterverwendet.

Falls der Schwefelgehalt der erzeugten Treibstoffe rohstoffbedingt zu hoch ist, kann in den Treibstoffkondensaten eine eigene getrennte Entschwefelungsstufe vorgesehen werden. Diese sind aus dem Stand der Technik bekannt. Alternativ oder zusätzlich kann der Schwefelgehalt durch die Hydrierung des Produktöls, wie oben beschrieben, reduziert werden.

Die Erfindung betrifft ferner eine Anlage wie hier beschrieben, welche mittel Druckregler inertisiert ist oder inertisiert werden kann. als Inertgas ist CO2, bspw. CO₂ welches wie hier beschrieben erzeugt wurde, geeignet.

Die nachstehend genannten **Beispiele** dienen der weiteren Erläuterung der Erfindung; sie sollen die Erfindung in keiner Weise limitieren.

### 1. Beispiel:

**Allgemein:** Gemäß Fig. 1 wird in einer Pilotanlage Treibstoff (Produktöl) hergestellt. Dabei wird in den Schneckenreaktoren (5), (6), (7) und (8) Rohstoff (1) in Gegenwart von Katalysator (2) in Produktöl (14), nicht kondensierbare Gase (16), Kohle (9) und wässrige Phase (10) umgesetzt.

**Durchführung:** Bei (1) wird der Rohstoff (Biomasse oder Biomasse/Kunststoffgemische) auf ca. 5mm zerkleinert, in einen Mischer (3) unter Zugabe von Katalysator (Pulver oder Paste) (2) eingebracht. Nach erfolgter Durchmischung wird die Mischung aus Rohstoff und Katalysator über eine Zellenradschleuse (4) in die Vorerwärmungsschnecke (5) eingetragen. Diese ist mit Mikrowellensendern (15) versehen, wobei über Hohleiter die Mikrowellen in die Schnecke (5) eingebracht werden. Die Verweilzeit und die Temperatur am Ausgang werden so gewählt, dass es zu einer teilweisen Verdampfung des anhaftenden Porenwassers kommt und das Rohmaterial auf ca. 150°C vorgewärmt wird. Aus der Vorwärmschnecke (5) wird das vorgewärmte Material per Schwerkraft über eine weitere Zellenradschleuse (4) in die eigentliche Reaktionsschnecke (6) eingetragen. Auch diese ist mit Mikrowellensendern (15) versehen. Die Strahlung wird über mikrowellentransparente Fenster in die Schnecke (6) eingekoppelt. Hier erfolgt die weitere Erwärmung auf ca. 350°C. Es wird davon ausgegangen, dass als Wärmeerzeuger und Überträger sowohl der durch die Mikrowellen angeregte Katalysator, als auch die sich bildende Kohle fungiert. In diesem Beispiel wird die Bildung eines Mikroplasmas nicht beobachtet. Der entstehende Mischdampf, bestehend aus Wasserdampf, nicht kondensierenden Gasen und Öldämpfen, verlässt die Reaktionsschnecke (6) nach oben. Danach tritt der nunmehr bereits weitgehend umgesetzte Rohstoff über ein weiteres Zellenrad (4) in die Entölungsschnecke (7) ein. Hier wird die noch schwerölhaltige Kohle durch die Mikrowellenbestrahlung weiter aufgeheizt, bis ca. 500°C, und dabei das anhaftende Schweröl, durch indirekte Erhitzung über die Absorption der Mikrowellen in der Kohle und der damit verbundenen Erwärmung, verdampft. Die Dämpfe verlassen die Entölungsschnecke nach oben in die folgende Kondensation. Die nunmehr entölte Kohle sowie Inertmaterial verlässt die Entölungsschnecke (7) über ein weiteres Zellenrad (4) in die Kühlschnecke (8). Am Eingang der Kühlschnecke (8) wird Wasser (10) eingedüst, sodass durch Verdampfungskühlung die Temperatur unter 100°C gesenkt wird und beim folgenden Kontakt mit Luft keine Selbstzündung erfolgen kann. Auch hier wird der Dampf nach oben in die Kondensation abgeleitet. Die Kohle 9 gelangt schlussendlich an die Luft.

Die einzelnen Mischdämpfe werden in getrennte indirekt mit Kühlwasser (12) gekühlte Kondensatoren (11) eingeleitet und dort bei ca. 30°C unter Bildung von Mischkondensat kondensiert. Das Kühlwasser wird in einem Kühlkreislauf rückgekühlt. Die nicht kondensierbaren Gase (16) (NKG) werden in ein Sammelrohr eingeleitet und einer thermischen Verwertung zugeführt.

Das Mischkondensat wird in einen Settler (13) (Phasentrenner) gefördert und dort in die Phasen Produktöl (14) und Wasser (10) getrennt.

Die wässrige Phase (10) wird nachbehandelt, um gereinigtes Wasser zu erhalten und / oder der Kühlschnecke (8) zugeführt. Das Produktöl (14) wird ggf. nachbehandelt, um Treibstoffe gemäss gültiger Norm zu erhalten.

**Massenbilanz:** 1000 kg trockene Biomasse ergeben 312,4 kg Produktöl; entspricht 375 1 Produktöl. (31,2% biogene Ausbeute, Dichte Produktöl 0,833 kg/l). Die Differenzmenge zu 1000 kg setzt sich im Ausgang aus Gas, Produktwasser, Inertstoffe und Kohle zusammen.

**Energiebilanz:** 1000 kg x 5kWh/kg = 5000 kWh Input Heizwert; 375 1 x 10kWh/l = 3750 kWh Output Öl Heizwert 3750 kWh /5000kWh = 75% energetische Ausbeute. Die Differenz an Energie zum Input ist wiederum auf den Abgang von Gas, Produktwasser Inertstoffe, Kohle und Verluste zurückzuführen.

## Patentansprüche

1. Verfahren zur Erzeugung von Treibstoffen (14) aus organischen Substanzen (1), umfassend die Schritte
■ Bereitstellung einer Mischung aus organischen Substanzen (1) und Katalysator (2);
■ Erwärmen der besagten Mischung auf 120 - 180°C und Abführen ggf. entstehender gasförmiger Produkte (1. Schritt);
■ Erhitzen der so erhaltenen Mischung auf 300 - 350°C und Abführen der dabei entstehenden gasförmigen Produkte (2. Schritt);
■ Erhitzen der verbleibenden Mischung auf 400 - 500°C und Abführen der dabei entstehenden gasförmigen Produkte (3. Schritt);
■ Kühlung der so erhaltenen Mischung auf unter 100°C und Abführung der dabei entstehenden festen Produkte (9) und der ggf. entstehenden gasförmigen Produkte (4. Schritt);
■ Aufarbeitung der erhaltenen gasförmigen Produkte wobei die Schritte 1, 2, 3 und 4 in separaten Reaktoren durchgeführt werden; und
wobei die Erwärmung der Reaktionsmischung in den Schritten 1, 2 und 3 durch Bestrahlung mit Mikrowellen erfolgt.

2. Verfahren nach Anspruch 1, **dadurch gekennzeichnet dass**
(a) die Aufarbeitung der gasförmigen Produkte (Schritte 1, 2, 3 und 4) die folgenden Schritte umfasst:
■ separate Kühlung zur Abtrennung nicht kondensierbarer Gase (16) von einer flüssigen Phase und
■ gemeinsame Weiterverarbeitung der verbleibenden flüssigen Phase zur Abtrennung von Treibstoff (14) und wässriger Phase (10)
und / oder (b) die Bereitstellung der Mischung aus organischen Substanzen (1) und Katalysator (2) die folgenden Schritte umfasst:
■ Zerkleinern von festen organischen Substanzen auf Partikelgrösse 0.5 - 50 mm und / oder Mischen von festen und flüssigen organischen Substanzen unter Bildung von Partikeln mit 0.5 - 50 mm Grösse, und
■ Bereitstellen von Katalysator, und
■ Mischen von besagten organischen Substanzen und besagtem
Katalysator und/oder (c) dass in weiteren Schritten
■ die gasförmigen Produkte (16), ggf. nach Aufarbeitung, einem Gasmotor zugeführt werden; und / oder
■ das Produktöl (14) einer Rektifikation und ggf. einer Hydrierung unterworfen wird; und / oder
■ die festen Produkte (9) ggf. nach Trocknung, einem Steamreforming oder einer Vergasung unterworfen werden; und / oder
■ die wässrige Phase (10) unter Bildung von Gas aufgearbeitet wird.

3. Verfahren nach Anspruch 1, **dadurch gekennzeichnet dass** zumindest die Schritte 1, 2, 3 und 4 (i) mit einem Überdruck von 10-50 mbar ("drucklos") und / oder (ii) kontinuierlich geführt werden.

4. Verfahren nach Anspruch 1, in welchem die Mischung aus organischen Substanzen (1) und Katalysator (2)
■ eine Restfeuchte von < 35% aufweist und / oder
■ eine Korngrösse von 0.5 - 5 mm aufweist (im Fall von unverpresstem Material) oder von 5 - 50 mm aufweist (im Fall von verpresstem Material), und / oder
■ einen Anteil an Katalysator im Bereich von 0.5 - 5 Masse-% aufweist.

5. Verfahren nach Anspruch 1, **dadurch gekennzeichnet, dass** die organischen Substanzen ausgewählt sind aus der Gruppe umfassend Biomasse und / oder Kunststoffe, wobei
■ die Kunststoffe bevorzugt ein Gemisch umfassen, welches PE PP, PS und/oder Kautschuk enthält; und / oder
■ die Biomasse bevorzugt ein Gemisch umfasst, welches Lignocellulose, Kohlehydrate und / oder deren Derivate enthält.

6. Verfahren nach Anspruch 1, **dadurch gekennzeichnet, dass** der Katalysator ausgewählt ist aus der Gruppe der Mikrowellen absorbierenden Stoffe, bevorzugt aus der Klasse der Zeolithe, der natürlichen Silikate, der synthetischen Silikate und der Aktivkohlen.

7. Verfahren nach Anspruch 1, **dadurch gekennzeichnet, dass** die Erwärmung der Reaktionsmischung in den Schritten 1 - 3 durch Bestrahlung mit Mikrowellen erfolgt und (i) durch Justierung der Strahlungsleistung und / oder Anordnung der Mikrowellen-Sender so erfolgt, dass kein Mikroplasma entsteht und / oder (ii) durch indirekte Erwärmung mittels Trägeröl ergänzt wird.

8. Verfahren nach einem der vorgängigen Ansprüche, **dadurch gekennzeichnet, dass** die Schritte 1, 2, 3 und 4 in Schneckenreaktoren (5, 6, 7, 8) durchgeführt werden, welche bevorzugt mittels Zellenradschleusen (4) am Ein- und Ausgang versehen sind.

9. Anlage, geeignet zur Herstellung von Treibstoffen aus organischen Substanzen, umfassend die nachstehend genannten, aufeinander folgenden und miteinander verbundenen Apparate:
■ ggf. Mischer (3) (zum Mischen von organischen Substanzen und Katalysator);
■ beheizbarer 1. Schneckenreaktor (5) mit Kühler (11) (zur Entnahme gasförmiger Produkte am Reaktorende);
■ beheizbarer 2. Schneckenreaktor (6) mit Kühler (11) (zur Entnahme gasförmiger Produkte am Reaktorende);
■ beheizbarer 3. Schneckenreaktor (7) mit Kühler (11) (zur Entnahme gasförmiger Produkte am Reaktorende);
■ beheizbarer 4. Schneckenreaktor (8) mit Kühler (11) (zur Entnahme gasförmiger Produkte am Reaktorende und zur Entnahme von festen Reaktionsprodukten (9));
■ ggf. Phasentrenner (13) welcher mit den Kühlern (11) verbunden ist (zur Trennung von Wasser/Öl Gemischen) wobei zumindest der Reaktor (6), bevorzugt (5), (6) und (7) mit Mikrowellensendern (15) als Heizquelle versehen sind.

10. Anlage gemäss Anspruch 9 **dadurch gekennzeichnet**
■ dass die Reaktoren (5), (6) und (7) durch Mikrowellensender beheizt werden; und/oder
■ dass die Reaktoren (5), (6) und (7) unabhängig von einander als Einzel- oder Doppelschnecke ausgeführt sind; und / oder
■ dass die Reaktoren (5), (6) und (7) unabhängig von einander in Ihrer Drehzahl regelbar sind; und / oder
■ dass die Reaktoren (5), (6) und (7) am Ein- und Ausgang mittels Zellenradschleussen (4) versehen sind.

11. Verwendung von Mikrowellensendern (15) in einem mehrstufigen Verfahren zur Herstellung von Treibstoffen (14) aus organischen Substanzen(1), insbesondere nach Anspruch 1.

12. Verwendung von Schneckenreaktoren (5, 6, 7) zur Herstellung von Treibstoffen (14), wobei diese Reaktoren bevorzugt mit Zellenradschleusen (4) (insbesondere an Ein- und Ausgang) und / oder mit Mikrowellensendern (15) versehen sind.
